# EUROPÄISCHE PATENTSCHRIFT

(11) **EP 1 457 686 B1**
(45) Veröffentlichungstag und Bekanntmachung des Hinweises auf die Patenterteilung: **28.12.2005**
(21) Anmeldenummer: 03405176.3
(22) Anmeldetag: 14.03.2003
(51) Int. Cl.: F16B 2/06, F16B 7/04

(54) **Kreuzklemmvorrichtung**
Device for cross-wise clamping
Dispositif de blocage en croix

(43) Veröffentlichungstag der Anmeldung: 15.09.2004
(73) Patentinhaber: Habasit AG, 4153 Reinach (CH)
(72) Erfinder: Iseli, Hansrudolf, 4123 Allschwill (CH)
(74) Vertreter: Bollhalder, Renato

(56) Entgegenhaltungen:
- DE-A- 3 531 674
- GB-A- 2 241 735
- US-A- 4 032 245
- US-A- 5 718 403

## Beschreibung

Die vorliegende Erfindung bezieht sich auf eine Kreuzklemmvorrichtung mit den Merkmalen des Oberbegriffs des Anspruches 1 zum Klemmen zweier Profile, die um 90° zueinander gedreht sind. Eine solche Kreuzklemmvorrichtung ist aus der GB-A-2241735 bekannt.

Unter Profil werden im Rahmen dieser Patentanmeldung auch Blechstreifen und Ähnliches subsumiert.

Zum Verbinden zweier zueinander senkrecht stehender Profile gibt es viele verschiedene Möglichkeiten. Beispielsweise können die beiden Profile unabhängig voneinander direkt an ein gemeinsames Verbindungsteil geschraubt werden, was den Nachteil hat, dass die Profile mit Schraubenlöchern versehen werden müssen. Um dies zu vermeiden, können die beiden Profile unabhängig voneinander jeweils zwischen zwei Klemmteilen eingeklemmt werden, welche mit den Klemmteilen des anderen Profils verbunden sind. Die ein Profil klemmenden Klemmteile können miteinander verschraubt werden, so dass die Klemmkraft durch die Verschraubung erzeugt wird. Ein Nachteil dieser Verbindungsart besteht darin, dass relative viele oder sonst komplizierte Einzelteile benötigt werden, insbesondere zwei Schrauben pro Profil, wenn eine gute Klemmwirkung erforderlich ist.

Angesichts der Nachteile der oben beschriebenen Verbindungsarten liegt der Erfindung die folgende Aufgabe zugrunde. Zu schaffen ist eine Vorrichtung zum Verbinden zweier zueinander senkrecht stehender Profile, die wenige einfache Einzelteile aufweist, mit denen eine stabile Verbindung erzeugt werden kann.

Diese Aufgabe wird durch die erfindungsgemässe Kreuzklemmvorrichtung gelöst, wie sie im unabhängigen Patentanspruch 1 definiert ist. Bevorzugte Ausführungsvarianten ergeben sich aus den abhängigen Patentansprüchen.

Die Erfindung besteht im Folgenden: Eine Kreuzklemmvorrichtung umfasst eine Basisplatte, die einen ersten und einen zweiten Schenkel und einen Klemmteil aufweist, der die beiden Schenkel miteinander verbindet, eine erste Klammer, die mittels einer ersten Schraube auf den ersten Schenkel geschraubt ist, und eine zweite Klammer, die mittels einer zweiten Schraube auf den zweiten Schenkel geschraubt ist. Die Basisplatte und die beiden Klammern sind so ausgebildet, dass zwischen der ersten und der zweiten Klammer ein erstes Profil und zwischen den beiden Klammern und dem Klemmteil der Basisplatte ein zweites Profil, das bezüglich des ersten Profils um 90° gedreht ist, klemmbar sind. Die erste und die zweite Schraube weisen jeweils einen Kopf auf, der zumindest teilweise kegelförmig ausgebildet ist, so dass beim Anziehen der ersten und der zweiten Schraube die erste und die zweite Klammer durch die schrägen Kegelflächen gegen das erste Profil gedrückt und die beiden Profile geklemmt werden.

Beim Anziehen der ersten und der zweiten Schraube stösst der jeweilige Schraubenkopf die betreffende Klammer aufgrund der Schrägfläche gegen das erste Profil. Auf diese Weise kann eine Klemmkraft senkrecht zur Schraubenrichtung erzeugt werden, die die Klemmung des ersten Profils zwischen den beiden Klammern bewirkt.

Ein wesentlicher Vorteil der erfindungsgemässen Kreuzklemmvorrichtung besteht darin, dass durch Anziehen der beiden Schrauben sowohl das zwischen der ersten und der zweiten Klammer angeordnete erste Profil als auch das zwischen den beiden Klammern und dem Klemmteil der Basisplatte angeordnete zweite Profil geklemmt werden, d.h. die beiden Schrauben eine Doppelfunktion übernehmen, so dass nicht separate Schrauben für das Klemmen des ersten Profils und das Klemmen des zweiten Profils benötigt werden. Dies trägt dazu bei, dass die Anzahl der Einzelteile klein gehalten werden kann. Durch die wenigen Einzelteile und deren optimale Kombination ergibt sich auch eine gute Reinigbarkeit der Vorrichtung. Dass die Schrauben eine Doppelfunktion wahrnehmen, hat ausserdem den Vorteil, dass das erste und das zweite Profil mittels der erfindungsgemässen Kreuzklemmvorrichtung schneller miteinander verbunden werden können.

Die erfindungsgemässe Kreuzklemmvorrichtung kann insbesondere überall dort eingesetzt werden, wo Schienen, Führungen, Abstützungen und Ähnliches auf querliegenden Tragstäben aufliegen und an Ort gehalten werden müssen.

Bei einer für gewisse Anwendungen vorteilhaften Ausführungsvariante der erfindungsgemässen Kreuzklemmvorrichtung ist zumindest eine der beiden Klammern zusätzlich mittels einer weiteren Schraube auf den zugehörigen Schenkel der Basisplatte geschraubt. Auf diese Weise kann ein stärkeres Klemmen des ersten Profils zwischen den beiden Klammern erreicht werden, was bei starken Belastungen nützlich sein kann.

Bevorzugt weisen die Schrauben jeweils einen ein Gewinde aufweisenden Schaft und einen Kopf auf, während der erste Schenkel der Basisplatte mindestens ein erstes mit einem Gewinde versehenes Loch aufweist, in das die erste Schraube geschraubt ist, und der zweite Schenkel der Basisplatte mindestens ein zweites mit einem Gewinde versehenes Loch aufweist, in das die zweite Schraube geschraubt ist. Die Schrauben werden mit dem Schaft in die Gewindelöcher in den Schenkeln der Basisplatte geschraubt, während die Köpfe der Schrauben die Klammern gegen die Basisplatte drücken.

Mit Vorteil weist mindestens eine der beiden Klammern ein Durchgangsloch auf, dessen Durchmesser zumindest in einer Richtung zum ersten Profil hin grösser ist als der Durchmesser des Schraubenschafts. Dadurch hat die Schraube im Durchgangsloch Spiel, so dass die Klammer senkrecht zur Schraube zumindest ein wenig verschoben werden kann und so eine Klemmkraft auf das erste Profil erzeugen kann.

Mit Vorteil weist das Durchgangsloch bzw. mindestens eines der Durchgangslöcher auf der der Basisplatte abgewandten Seite eine Aufweitung auf, in der der Kopf der zugehörigen Schraube zumindest teilweise aufgenommen ist. Dieses zumindest teilweise Versenken des Schraubenkopfs in der Aufweitung sorgt dafür, dass die Schraube nicht oder zumindest nicht so weit aus der Klammer vorsteht. Die Kreuzklemmvorrichtung ist dadurch einfacher reinigbar.

Bevorzugt ist die Aufweitung zumindest auf der dem ersten Profil zugewandten Seite durch eine schräge Fläche der Klammer begrenzt, so dass beim Anziehen der Schraube die Klammer durch die auf die schräge Fläche drückende Schraube gegen das erste Profil gedrückt wird. Auf diese Weise kann eine Klemmkraft senkrecht zur Schraubenrichtung erzeugt werden, die die Klemmung des ersten Profils zwischen den beiden Klammern bewirkt. Optimalerweise ist gleichzeitig der Kopf der Schraube zumindest teilweise kegelförmig ausgebildet, wie weiter oben erwähnt, so dass zwei schräge Flächen aufeinander zu liegen kommen.

Vorteilhafterweise ist der Klemmteil der Basisplatte dünner als die beiden Schenkel und/oder die Klammern sind im Bereich des Klemmteils der Basisplatte dünner als im Bereich der Schenkel, so dass zwischen den beiden Klammern und dem Klemmteil der Basisplatte eine Lücke vorhanden ist, in der das zweite Profil klemmbar ist, während die Klammern an den Schenkeln anliegen. Eine derartige Ausgestaltung der Basisplatte und der Klammern gewährleistet ein festes Klemmen des zweiten Profils bei kompakter Kreuzklemmvorrichtung ohne schmutzanfällige Lücken.

Bei einer vorteilhaften Ausführungsvariante haben die beiden Klammern an ihrem einen Ende jeweils einen sich zu der anderen Klammer hin erstreckenden Vorsprung, wobei die beiden Vorsprünge sich berühren. Beim Anziehen der Schrauben bewirken die sich berührenden Vorsprünge eine leichte Drehung der Klammern, die die Klemmung des ersten Profils noch verstärkt.

Vorzugsweise liegen die beiden Klammern flächig am ersten Profil und am zweiten Profil an. Dadurch ist eine flächige und somit stabilere Übertragung der Klemmkraft gewährleistet.

Im Folgenden wird die erfindungsgemässe Kreuzklemmvorrichtung unter Bezugnahme auf die beigefügten Zeichnungen anhand von vier Ausführungsbeispielen detaillierter beschrieben. Es zeigen:
- Fig. 1 -: eine Ansicht von vorne eines ersten Ausführungsbeispiels der erfindungsgemässen Kreuzklemmvorrichtung mit zwei geklemmten Profilen;
- Fig. 2 -: eine Seitenansicht der Kreuzklemmvorrichtung mit den zwei geklemmten Profilen von Fig. 1;
- Fig. 3 -: eine Schraube der Kreuzklemmvorrichtung von Fig. 1;
- Fig. 4 -: eine Ansicht von vorne der Basisplatte der Kreuzklemmvorrichtung von Fig. 1;
- Fig. 5 -: eine Seitenansicht der Basisplatte von Fig. 4;
- Fig. 6 -: eine Ansicht von vorne der beiden Klammern der Kreuzklemmvorrichtung von Fig. 1;
- Fig. 7 -: eine Seitenansicht der Klammern von Fig. 6;
- Fig. 8 -: eine Ansicht von vorne eines zweiten Ausführungsbeispiels der erfindungsgemässen Kreuzklemmvorrichtung mit zwei geklemmten Profilen;
- Fig. 9 -: eine Ansicht von vorne eines dritten Ausführungsbeispiels der erfindungsgemässen Kreuzklemmvorrichtung mit zwei geklemmten Profilen; und
- Fig. 10 -: eine Ansicht von vorne eines vierten Ausführungsbeispiels der erfindungsgemässen Kreuzklemmvorrichtung mit zwei geklemmten Profilen, das zwei zusätzliche Schrauben umfasst.

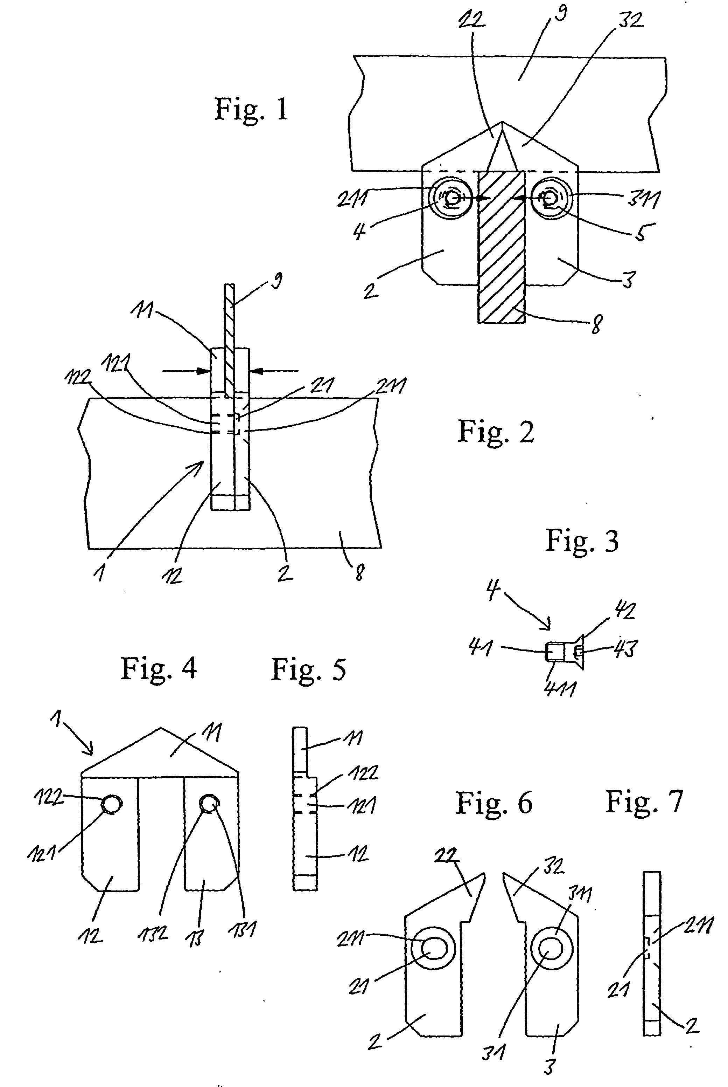

Das in den Figuren 1 bis 7 dargestellte erste Ausführungsbeispiel einer erfindungsgemässen Kreuzklemmvorrichtung umfasst eine Basisplatte 1, auf die mittels einer ersten Schraube 4 und einer zweiten Schraube 5 eine erste Klammer 2 und eine zweite Klammer 3 geschraubt sind. Ein erstes Profil 8 ist zwischen der ersten Klammer 2 und der zweiten Klammer 3 geklemmt, während ein zweites Profil 9, das bezüglich des ersten Profils 8 um 90° gedreht ist, zwischen der Basisplatte 1 und den beiden Klammern 2 und 3 geklemmt ist.

Die Basisplatte 1 umfasst einen ersten Schenkel 12, einen zweiten Schenkel 13 sowie einen Klemmteil 11, der die beiden Schenkel 12, 13 an ihrem einen Ende miteinander verbindet. Die einander zugewandten Seiten der Schenkel 12 und 13 sind zueinander parallel. Der erste Schenkel 12 weist ein Loch 121 auf, das mit einem Gewinde 122 versehen ist, während der zweite Schenkel 13 ein Loch 131 aufweist, das mit einem Gewinde 132 versehen ist. Die beiden Schenkel 12, 13 sind symmetrisch ausgebildet, so dass unter anderem die beiden Löcher 121, 131, in die die beiden Schrauben 4, 5 geschraubt sind, gleiche Abstände zu den Enden des jeweiligen Schenkels 12, 13 haben.

Der Klemmteil 11 der Basisplatte 1 ist dachförmig ausgebildet und ist dünner als die beiden Schenkel 12, 13, so dass zwischen dem Klemmteil 11 und den beiden Klammern 2, 3 eine Lücke vorhanden ist, in der das zweite Profil 9 geklemmt ist.

Die erste Schraube 4 weist einen ein Gewinde 411 aufweisenden Schaft 41 und einen Kopf 42 auf. Der Kopf 42 ist kegelförmig ausgebildet und mit einer Sechskant-Ausnehmung 43 versehen, in die zum Drehen der Schraube 4 ein Sechskant-Schlüssel einführbar ist. Die zweite Schraube 5 ist entsprechend der ersten Schraube 4 ausgebildet.

Die erste und die zweite Klammer 2 bzw. 3 weisen jeweils ein längliches Durchgangsloch 21 bzw. 31 auf, dessen Durchmesser in einer Richtung zum ersten Profil 8 hin grösser ist als der Durchmesser des Schraubenschafts 41. Dadurch ist die Klammer 2 bzw. 3 senkrecht zu der in die Basisplatte 1 geschraubten Schraube 4 bzw. 5 um einen kleinen Weg, beispielsweise 1 bis 3 mm, verschiebbar. Die Durchgangslöcher 21 bzw. 31 weisen auf der der Basisplatte 1 abgewandten Seite eine Aufweitung 211 bzw. 311 auf, in der der Kopf 42 der Schraube 4 bzw. der Kopf der Schraube 5 aufgenommen ist. Die Aufweitung 211, 311 ist rundherum durch eine schräge Fläche der Klammer 2 bzw. 3 begrenzt.

An ihrem einen Ende haben die beiden Klammern 2, 3 jeweils einen sich zu der anderen Klammer 3, 2 hin erstreckenden Vorsprung 22 bzw. 32, wobei die beiden Vorsprünge 22, 32 sich berühren.

Das erste Profil 8 ist hier ein im Querschnitt rechteckiges Stabprofil, während das zweite Profil 9 ein viel dünnerer Blechstreifen ist.

Das erste Profil 8 ist zwischen der ersten Klammer 2 und der zweiten Klammer 3 angeordnet, die flächig an ihm anliegen, und hält diese soweit auseinander, dass die Schrauben 4, 5 sich in den länglichen Durchgangslöchern 21, 31 an deren dem ersten Profil 8 zugewandten Enden befinden. Beim Anziehen der Schrauben 4, 5 drücken diese mit den kegelförmigen Köpfen auf die die Aufweitungen 211, 311 begrenzenden schrägen Flächen der Klammern 2 und 3, wodurch die Klammern 2, 3 gegen das erste Profil 8 gedrückt werden und dieses festklemmen. Die Klemmkräfte sind in Fig. 1 mit Pfeilen angedeutet. Die sich berührenden Vorsprünge 22 und 32 bewirken ein Drehmoment, das die die Vorsprünge 22, 32 nicht aufweisenden Enden der Klammern 2, 3 stärker gegen das erste Profil 8 drückt.

Das zweite Profil 9 ist zwischen dem Klemmteil 11 der Basisplatte 1 und den Vorsprüngen 22, 32 der Klammern 2, 3 angeordnet, die beim Anziehen der Schrauben 4, 5 gegen das zweite Profil 9 gedrückt werden. Die in Fig. 2 mit Pfeilen dargestellte Klemmkraft ergibt sich daraus, dass das zweite Profil 9 ein bisschen, beispielsweise zwischen 0,1 und 1 mm, dicker ist als die Differenz der Dicken der beiden Schenkel 12, 13 und des Klemmteils 11.

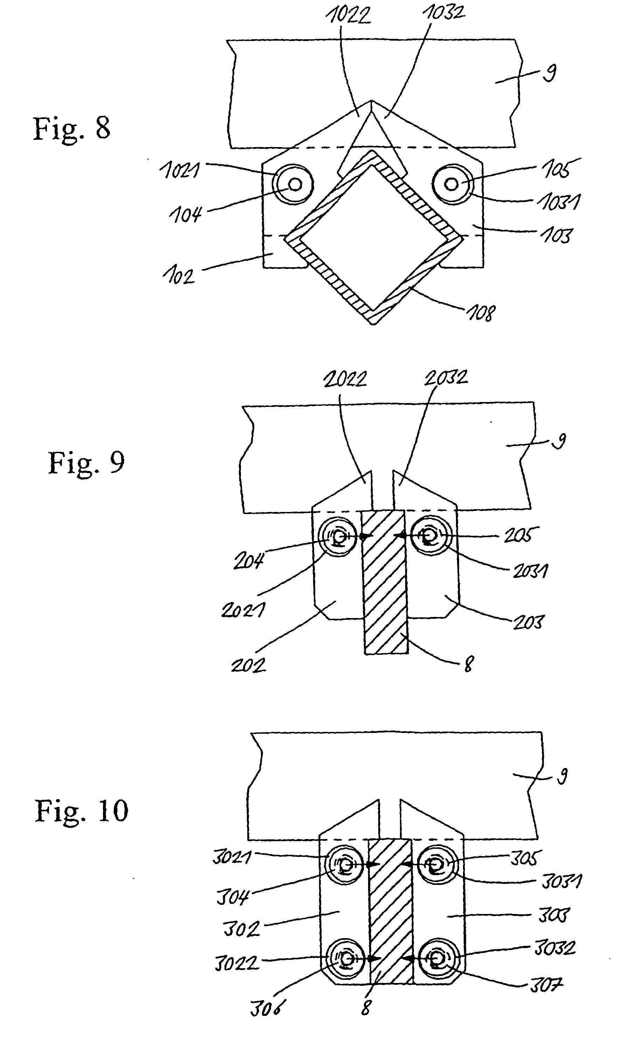

Das in Fig. 8 dargestellte zweite Ausführungsbeispiel einer erfindungsgemässen Kreuzklemmvorrichtung unterscheidet sich vom ersten Ausführungsbeispiel durch die Form der ersten Klammer 102, der zweiten Klammer 103 und der Schenkel der Basisplatte. Diese Formen sind an das erste Profil 108 angepasst, das hier ein auf der Kante stehendes hohles Vierkantprofil ist. Die Klammern 102, 103, die sich berührende Vorsprünge 1022, 1032 aufweisen, sind mittels Schrauben 104, 105 auf die Basisplatte geschraubt, wobei die Köpfe der Schrauben 104, 105 wiederum in Aufweitungen 1021, 1031 von Durchgangslöchern in den Klammern 102, 103 versenkt sind. Ansonsten gilt das zum ersten Ausführungsbeispiel Gesagte.

Beim dritten Ausführungsbeispiel einer erfindungsgemässen Kreuzklemmvorrichtung gemäss Fig. 9 berühren sich die Vorsprünge 2022 und 2032 der ersten Klammer 202 und der zweiten Klammer 203 nicht, so dass kein Drehmoment erzeugt wird. Die Klammern 202, 203 sind mittels Schrauben 204, 205 auf die Basisplatte geschraubt, wobei die Köpfe der Schrauben 204, 205 auch hier in Aufweitungen 2021, 2031 von Durchgangslöchern in den Klammern 202, 203 versenkt sind. Ansonsten gilt das zum ersten Ausführungsbeispiel Gesagte.

Das in Fig. 10 dargestellte vierte Ausführungsbeispiel einer erfindungsgemässen Kreuzklemmvorrichtung unterscheidet sich vom dritten Ausführungsbeispiel dadurch, dass die erste Klammer 302 und die zweite Klammer 303 nicht nur mittels der ersten Schraube 304 bzw. der zweiten Schraube 305 an jeweils einen der Schenkel der Basisplatte geschraubt sind, sondern hierzu jeweils noch eine weitere Schraube 306 bzw. 307 vorhanden ist. Die Köpfe der Schrauben 304, 305, 306, 307 sind wiederum in Aufweitungen 3021, 3022, 3031, 3032 von Durchgangslöchern in den Klammern 302, 303 versenkt. Die zusätzlichen Schrauben 306, 307 sorgen für eine grössere Klemmkraft in Richtung der eingezeichneten Pfeile. Ansonsten gilt das zum dritten Ausführungsbeispiel Gesagte.

Zu den vorbeschriebenen Kreuzklemmvorrichtungen sind weitere konstruktive Variationen realisierbar. Hier ausdrücklich erwähnt sei noch, dass die Durchgangslöcher in den Klammern 2, 3; 102, 103; 202, 203; 302, 303 anstatt länglich auch rund mit einem Durchmesser ausgebildet sein können, der grösser ist als der Durchmesser des Schafts der jeweils zugehörigen Schraube 4, 5; 104, 105; 204, 205; 304, 305, 306, 307, so dass die Verschiebbarkeit der Klammern 2, 3; 102, 103; 202, 203; 302, 303 bezüglich der Schrauben 4, 5; 104, 105; 204, 205; 304, 305, 306, 307 gewährleistet ist.

## Patentansprüche

1. Kreuzklemmvorrichtung mit einer Basisplatte (1), die einen ersten und einen zweiten Schenkel (12, 13) und einen Klemmteil (11) aufweist, der die beiden Schenkel (12, 13) miteinander verbindet, **gekennzeichnet durch** eine erste Klammer (2; 102; 202; 302), die mittels einer ersten Schraube (4; 104; 204; 304) auf den ersten Schenkel (12) geschraubt ist, und eine zweite Klammer (3; 103; 203; 303), die mittels einer zweiten Schraube (5; 105; 205; 305) auf den zweiten Schenkel (13) geschraubt ist, wobei die Basisplatte (1) und die beiden Klammern (2, 3; 102, 103; 202, 203; 302, 303) so ausgebildet sind, dass zwischen der ersten und der zweiten Klammer (2, 3; 102, 103; 202, 203; 302, 303) ein erstes Profil (8; 108) und zwischen den beiden Klammern (2, 3; 102, 103; 202, 203; 302, 303) und dem Klemmteil (11) der Basisplatte (1) ein zweites Profil (9), das bezüglich des ersten Profils (8; 108) um 90° gedreht ist, klemmbar sind, wobei die erste und die zweite Schraube (4, 5; 104, 105; 204, 205; 304, 305) jeweils einen Kopf (42) aufweisen, der zumindest teilweise kegelförmig ausgebildet ist, so dass beim Anziehen der ersten und der zweiten Schraube (4, 5; 104, 105; 204, 205; 304, 305) die erste und die zweite Klammer (2, 3; 102, 103; 202, 203; 302, 303) **durch** die schrägen Kegelflächen gegen das erste Profil (8; 108) gedrückt und die beiden Profile (8, 9; 108) geklemmt werden.

2. Kreuzklemmvorrichtung nach Anspruch 1, **dadurch gekennzeichnet, dass** zumindest eine der beiden Klammern (302, 303) zusätzlich mittels einer weiteren Schraube (306, 307) auf den zugehörigen Schenkel der Basisplatte geschraubt ist.

3. Kreuzklemmvorrichtung nach Anspruch 1 oder 2, **dadurch gekennzeichnet, dass** die Schrauben (4, 5; 104, 105; 204, 205; 304, 305, 306, 307) jeweils einen ein Gewinde (411) aufweisenden Schaft (41) und einen Kopf (42) aufweisen, der erste Schenkel (12) der Basisplatte (1) mindestens ein erstes mit einem Gewinde (122) versehenes Loch (121) aufweist, in das die erste Schraube (4; 104; 204; 304) geschraubt ist, und der zweite Schenkel (13) der Basisplatte (1) mindestens ein zweites mit einem Gewinde (132) versehenes Loch (131) aufweist, in das die zweite Schraube (5; 105; 205; 305) geschraubt ist.

4. Kreuzklemmvorrichtung nach Anspruch 3, **dadurch gekennzeichnet, dass** mindestens eine der beiden Klammern (2, 3; 102, 103; 202, 203; 302, 303) ein Durchgangsloch (21, 31) aufweist, dessen Durchmesser zumindest in einer Richtung zum ersten Profil (8; 108) hin grösser ist als der Durchmesser des Schraubenschafts (41).

5. Kreuzklemmvorrichtung nach Anspruch 4, **dadurch gekennzeichnet, dass** das Durchgangsloch bzw. mindestens eines der Durchgangslöcher (21, 31) auf der der Basisplatte (1) abgewandten Seite eine Aufweitung (211, 311; 1021, 1031; 2021, 2031; 3021, 3022, 3031, 3032) aufweist, in der der Kopf (42) der zugehörigen Schraube (4, 5; 104, 105; 204, 205; 304, 305, 306, 307) zumindest teilweise aufgenommen ist.

6. Kreuzklemmvorrichtung nach Anspruch 5, **dadurch gekennzeichnet, dass** die Aufweitung (211, 311; 1021, 1031; 2021, 2031; 3021, 3022, 3031, 3032) zumindest auf der dem ersten Profil (8; 108) zugewandten Seite durch eine schräge Fläche der Klammer (2, 3; 102, 103; 202, 203; 302, 303) begrenzt ist, so dass beim Anziehen der Schraube (4, 5; 104, 105; 204, 205; 304, 305) die Klammer (2, 3; 102, 103; 202, 203; 302, 303) durch die auf die schräge Fläche drückende Schraube (4, 5; 104, 105; 204, 205; 304, 305) gegen das erste Profil (8; 108) gedrückt wird.

7. Kreuzklemmvorrichtung nach einem der Ansprüche 1 bis 6, **dadurch gekennzeichnet, dass** der Klemmteil (11) der Basisplatte (1) dünner ist als die beiden Schenkel (12, 13) und/oder die Klammern (2, 3; 102, 103; 202, 203; 302, 303) im Bereich des Klemmteils (11) der Basisplatte (1) dünner sind als im Bereich der Schenkel (12, 13), so dass zwischen den beiden Klammern (2, 3; 102, 103; 202, 203; 302, 303) und dem Klemmteil (11) der Basisplatte (1) eine Lücke vorhanden ist, in der das zweite Profil (9) klemmbar ist, während die Klammern (2, 3; 102, 103; 202, 203; 302, 303) an den Schenkeln (12, 13) anliegen.

8. Kreuzklemmvorrichtung nach einem der Ansprüche 1 bis 7, **dadurch gekennzeichnet, dass** die beiden Klammern (2, 3; 102, 103; 202, 203; 302, 303) an ihrem einen Ende jeweils einen sich zu der anderen Klammer (2, 3; 102, 103; 202, 203; 302, 303) hin erstreckenden Vorsprung (22, 32; 1022, 1032) haben und die beiden Vorsprünge (22, 32; 1022, 1032) sich berühren.

9. Kreuzklemmvorrichtung nach einem der Ansprüche 1 bis 8, **dadurch gekennzeichnet, dass** die beiden Klammern (2, 3; 102, 103; 202, 203; 302, 303) flächig am ersten Profil (8; 108) und am zweiten Profil (9) anliegen.

## Claims

1. Cross clamping device with a base plate (1), which has a first and a second leg (12, 13) and a clamping piece (11) which connects the two legs (12, 13) with each other, **characterised by** a first clamp (2, 102; 202; 302), which by means of a first screw (4; 104; 204; 304) is screwed onto the first leg (12), and a second clamp (3; 103; 203; 303), which by means of a second screw (5; 105; 205; 305) is screwed onto the second leg (13), wherein the base plate (1) and the two clamps (2, 3; 102, 103; 202, 203; 302, 303) are so formed that between the first and the second clamp (2, 3; 102, 103; 202, 203; 302, 303) a first bar (8; 108), and between the two clamps (2, 3; 102, 103; 202, 203; 302, 303) and the clamping piece (11) of the base plate (1) a second bar (9), which is rotated by 90° in relation to the first bar (8; 108), are able to be clamped, wherein the first and the second screw (4, 5; 104, 105; 204, 205; 304, 305) each have a head (42), which is at least partially conical shaped, so that by the tightening of the first and of the second screw (4, 5; 104, 105; 204, 205; 304, 305) the first and the second clamp (2, 3; 102, 103; 202, 203; 302, 303) are pressed by the slanting conical surface against the first bar (8; 108) and the two bars (8, 9; 108) are clamped.

2. Cross clamping device according to claim 1, **characterised in that** at least one of the two clamps (302, 303) is additionally screwed onto the accompanying leg of the base plate by means of a further screw (306, 307).

3. Cross clamping device according to claim 1 or 2, **characterised in that** the screws (4, 5; 104, 105; 204, 205; 304, 305, 306, 307) each have a shaft (41) with a thread (411) and have a head (42), the first leg (12) of the base plate (1) has at least a first hole (121) with a thread (122), in which the first screw (4; 104; 204; 304) is screwed, and the second leg (13) of the base plate (1) has at least a second hole (131) with a thread (132), in which the second screw (5; 105; 205; 305) is screwed.

4. Cross clamping device according to claim 3, **characterised in that** at least one of the two clamps (2, 3; 102, 103; 202, 203; 302, 303) has a through hole (21, 31), whose diameter at least in the direction towards the first bar (8; 108) is greater than the diameter of the screw shaft (41).

5. Cross clamping device according to claim 4, **characterised in that** the through hole or at least one of the through holes (21, 31) has an enlargement (211, 311; 1021, 1031; 2021, 2031; 3021, 3022, 3031, 3032) on the side opposite from the base plate (1), in which the head (42) of the accompanying screw (4, 5; 104, 105; 204, 205; 304, 305, 306, 307) is at least partially inserted.

6. Cross clamping device according to claim 5, **characterised in that** the enlargement (211, 311; 1021, 1031; 2021, 2031; 3021, 3022, 3031, 3032) at least on the side on the same side as the first bar (8; 108) is bordered by a slanting surface of the clamp (2, 3; 102, 103; 202, 203; 302, 303), so that in the tightening of the screw (4, 5; 104, 105; 204, 205; 304, 305) the clamp (2, 3; 102, 103; 202, 203; 302, 303) is pressed against the first bar (8; 108) by the screw (4, 5; 104, 105; 204, 205; 304, 305) which is pressing on the slanting surface.

7. Cross clamping device according to any one of claims 1 to 6, **characterised in that** the clamping piece (11) of the base plate (1) is thinner than the two legs (12, 13) and/or the clamps (2, 3; 102, 103; 202, 203; 302, 303) in the region of the clamping piece (11) of the base plate (1) are thinner than in the region of the legs (12, 13), so that between the two clamps (2, 3; 102, 103; 202, 203; 302, 303) and the clamping piece (11) of the base plate (1) a space is present, in which the second bar (9) is able to be clamped, while the clamps (2, 3; 102, 103; 202, 203; 302, 303) lie on the legs (12, 13).

8. Cross clamping device according to any one of claims 1 to 7, **characterised in that** the two clamps (2, 3; 102, 103; 202, 203; 302, 303) each have at one of their ends a projection (22, 32; 1022, 1032) which extends to the other clamp (2, 3; 102, 103; 202, 203; 302, 303) and that the two projections (22, 32; 1022, 1032) touch each other.

9. Cross clamping device according to any one of claims 1 to 8, **characterised in that** the two clamps (2, 3; 102, 103; 202, 203; 302, 303) lie flat on the first bar (8; 108) and on the second bar (9).

## Revendications

1. Dispositif de blocage en croix comprenant une plaque de base (1) qui présente une première et une deuxième branche (12, 13) et une partie de blocage (11) qui relie entre elles les deux branches (12, 13), **caractérisé par** une première pince (2 ; 102 ; 202 ; 302) qui est vissée sur la première branche (12) au moyen d'une première vis (4 ; 104 ; 204 ; 304) et une deuxième pince (3 ; 103 ; 203 ; 303) qui est vissée sur la deuxième branche (13) au moyen d'une deuxième vis (5 ; 105 ; 205 ; 305), la plaque de base (1) et les deux pinces (2, 3 ; 102, 103 ; 202, 203 ; 302, 303) étant réalisées de telle sorte qu'un premier profilé (8 ; 108) puisse être bloqué entre la première et la deuxième pince (2, 3 ; 102, 103 ; 202, 203 ; 302, 303) et qu'un deuxième profilé (9), qui est tourné de 90° par rapport au premier profilé (8 ; 108), puisse être bloqué entre les deux pinces (2, 3 ; 102, 103 ; 202, 203 ; 302, 303) et la partie de blocage (11) de la plaque de base (1), la première et la deuxième vis (4, 5 ; 104, 105 ; 204, 205 ; 304, 305) présentant chacune une tête (42) qui est réalisée au moins partiellement en forme de cône de sorte que lors du vissage de la première et de la deuxième vis (4, 5 ; 104, 105 ; 204, 205 ; 304, 305) la première et la deuxième pince (2, 3 ; 102, 103 ; 202, 203 ; 302, 303) soient pressées par les surfaces coniques obliques contre le premier profilé (8 ; 108) et que les deux profilés (8, 9 ; 108) soient bloqués.

2. Dispositif de blocage en croix selon la revendication 1, **caractérisé en ce qu'**au moins l'une des deux pinces (302, 303) est vissée en outre au moyen d'une vis supplémentaire (306, 307) sur la branche associée de la plaque de base.

3. Dispositif de blocage en croix selon la revendication 1 ou 2, **caractérisé en ce que** les vis (4, 5 ; 104, 105 ; 204, 205 ; 304, 305, 306, 307) présentent chacune une tige (41) présentant un filetage (411) et une tête (42), la première branche (12) de la plaque de base (1) présente au moins un premier trou (121) pourvu d'un filetage (122) dans lequel la première vis (4 ; 104 ; 204 ; 304) est vissée, et la deuxième branche (13) de la plaque de base (1) présente au moins un deuxième trou (131) pourvu d'un filetage (132) dans lequel la deuxième vis (5 ; 105 ; 205 ; 305) est vissée.

4. Dispositif de blocage en croix selon la revendication 3, **caractérisé en ce qu'**au moins l'une des deux pinces (2, 3 ; 102, 103 ; 202, 203 ; 302, 303) présente un trou traversant (21, 31) dont le diamètre est plus grand que le diamètre de la tige de la vis (41) au moins dans une direction vers le premier profilé (8 ; 108).

5. Dispositif de blocage en croix selon la revendication 4, **caractérisé en ce que** le trou traversant ou au moins l'un des trous traversants (21, 31) présente du côté opposé à la plaque de base (1) un élargissement (211, 311 ; 1021, 1031 ; 2021, 2031 ; 3021, 3022, 3031, 3032) dans lequel la tête (42) de la vis associée (4, 5 ; 104, 105 ; 204, 205 ; 304, 305, 306, 307) est reçue au moins partiellement.

6. Dispositif de blocage en croix selon la revendication 5, **caractérisé en ce que** l'élargissement (211, 311 ; 1021, 1031 ; 2021, 2031 ; 3021, 3022, 3031, 3032) est limité au moins du côté tourné vers le premier profilé (8 ; 108) par une face oblique de la pince (2, 3 ; 102, 103 ; 202, 203 ; 302, 303), de sorte que lors du vissage de la vis (4, 5 ; 104, 105 ; 204, 205 ; 304, 305) la pince (2, 3 ; 102, 103 ; 202, 203 ; 302, 303) soit pressée contre le premier profilé (8 ; 108) par la vis (4, 5 ; 104, 105 ; 204, 205 ; 304, 305) pressant contre la face oblique.

7. Dispositif de blocage en croix selon l'une quelconque des revendications 1 à 6, **caractérisé en ce que** la partie de blocage (11) de la plaque de base (1) est plus mince que les deux branches (12, 13) et/ou les pinces (2, 3 ; 102, 103 ; 202, 203 ; 302, 303) dans la région de la partie de blocage (11) de la plaque de base (1) sont plus minces que dans la région des branches (12, 13), de sorte qu'entre les deux pinces (2, 3 ; 102, 103 ; 202, 203 ; 302, 303) et la partie de blocage (11) de la plaque de base (1) subsiste un vide dans lequel le deuxième profilé (9) peut être bloqué tandis que les pinces (2, 3 ; 102, 103 ; 202, 203 ; 302, 303) s'appliquent contre les branches (12, 13).

8. Dispositif de blocage en croix selon l'une quelconque des revendications 1 à 7, **caractérisé en ce que** les deux pinces (2, 3 ; 102, 103 ; 202, 203 ; 302, 303) ont à l'une de leurs extrémités à chaque fois une saillie (22, 32 ; 1022, 1032) s'étendant vers l'autre pince (2, 3 ; 102, 103 ; 202, 203 ; 302, 303) et les deux saillies (22, 32 ; 1022, 1032) sont en contact.

9. Dispositif de blocage en croix selon l'une quelconque des revendications 1 à 8, **caractérisé en ce que** les deux pinces (2, 3 ; 102, 103 ; 202, 203 ; 302, 303) s'appliquent à plat sur le premier profilé (8 ; 108) et sur le deuxième profilé (9).
